# EUROPÄISCHE PATENTSCHRIFT

(11) **EP 1 181 506 B1**
(45) Veröffentlichungstag und Bekanntmachung des Hinweises auf die Patenterteilung: **13.02.2013**
(21) Anmeldenummer: 00931240.6
(22) Anmeldetag: 18.05.2000
(51) Int. Cl.: G01F 1/66, G01F 1/74, G01N 22/04

(54) **MESSVERFAHREN UND VORRICHTUNG ZU DESSEN DURCHFÜHRUNG**
MEASURING METHOD AND DEVICE FOR CARRYING OUT THE SAME
PROCEDE DE MESURE ET DISPOSITIF PERMETTANT DE LE METTRE EN OEUVRE

(30) Priorität: 28.05.1999 DE 19924592
(43) Veröffentlichungstag der Anmeldung: 27.02.2002
(73) Patentinhaber: Vetco Gray Controls Limited, Bristol BS48 1BS (GB)
(72) Erfinder: GASCH, Armin, D-69126 Heidelberg (DE); RIEGLER, Peter, D-64347 Griesheim (DE)
(74) Vertreter: Newstead, Michael John
(86) Internationale Anmeldenummer: PCT/EP2000/004490
(87) Internationale Veröffentlichungsnummer: WO 2000/073744

(56) Entgegenhaltungen:
- US-A- 5 049 823
- US-A- 5 389 883
- US-A- 5 792 962
- US-A- 5 793 216
- PATENT ABSTRACTS OF JAPAN vol. 010, no. 147 (P-460), 29. Mai 1986 (1986-05-29) & JP 60 263815 A (SUMITOMO KINZOKU KOGYO KK), 27. Dezember 1985 (1985-12-27)

## Beschreibung

Die Erfindung bezieht sich auf ein Verfahren zur Messung von Durchflußgeschwindigkeiten aller mit elektromagnetischen Wellen wechselwirkender Komponenten eines in einer Förderleitung strömenden Fluids gemäß dem Oberbegriff des Patentanspruchs 1, sowie auf eine Vorrichtung zur Durchführung des Verfahrens gemäß Patentanspruch 2.

Die Messungen der Durchflußgeschwindigkeiten und Volumenströme von Fluiden, die eine oder mehrere Komponenten bzw. Phasen aufweisen, bilden die Grundlage für jede industrielle Prozeßführung.

Bei den bis jetzt für solche Messungen verwendeten Verfahren erfolgt die Bestimmung der Volumenanteile und die Ermittlung der Durchflußgeschwindigkeiten der Komponenten eines Fluids getrennt voneinander. Damit ist auch eine Aufteilung der Meßvorrichtungen in zwei oder mehrere Einrichtungen verbunden. Eine Vorrichtung wird dabei zur Bestimmung der Volumenanteile verwendet, während eine zweite Vorrichtung zur Bestimmung der Geschwindigkeiten benutzt wird. Die Ermittlungen der Geschwindigkeiten und Volumenfraktionen erfolgen bei diesen bekannten Verfahren zudem nicht an der gleichen Stelle. Durch diese räumliche Trennung werden die Messungen der Geschwindigkeiten und der Volumenanteile effektiv zu unterschiedlichen Zeiten durchgeführt. Ferner muß berücksichtigt werden, daß sich das Flußprofil mit der Zeit in vielen Fällen ändert. Werden die Geschwindigkeiten und Volumenanteile aus der Korrelation solcher Meßsignale räumlich getrennter Meßvorrichtungen ermittelt, führt die Zeitabhängigkeit des Flusses zu einem deutlich verringerten Auflösungsvermögen, so daß insgesamt ungenauere Meßergebnisse ermittelt werden.

In der GB 2 271 637 B (US 5,389,883 A) ist ein Verfahren beschrieben, mit dem der Volumenanteil von Gas und Wasser in Rohöl ermittelt werden kann, das durch eine Förderleitung fließt. Die jeweiligen Volumenanteile werden mit Hilfe von elektromagnetischen Signalen hoher Frequenz und deren Resonanzsignalen ermittelt.

Aus der US 5,792,962 ist ein Verfahren bekannt, bei dem zur Messung der Geschwindigkeiten von Komponenten eines Fluids dessen Einwirkungen auf die Ausbreitungscharakteristik von elektrischen oder akustischen Signalen genutzt wird, die durch das Fluid geleitet werden.

In der US 5,793,216 ist eine Durchflussmessvorrichtung beschrieben, bei der ein elektromagnetisches Signal mit vorgegebener Frequenz durch eine Flüssigkeit geleitet wird. Die Komponenten der Flüssigkeit sind in der Lage, in Wechselwirkung mit elektromagnetischen Wellen und damit auch mit dem durch die Flüssigkeit geleiteten Signal zu treten. Aus der Dopplerverschiebung zwischen dem ursprünglichen Signal und der resultierenden Signal wird die Geschwindigkeit der Flüssigkeit und die ihrer Komponenten ermittelt.

Desweiteren sind Meßvorrichtungen bekannt, bei denen sehr energiereiche Strahlung in Form von Röntgen-, oder γ-Strahlung zur Bestimmung der Geschwindigkeiten und Volumenanteile der Komponenten eines Fluids verwendet werden. Wegen dieser Strahlung sind diese Einrichtungen zum Teil konstruktiv sehr aufwendig. Außerdem müssen sie mit zusätzlichen Sicherheitsvorkehrungen versehen werden.

Bei den bekannten Verfahren, bei denen die Geschwindigkeiten und Volumenanteile der Komponenten eines Fluids mit Hilfe des Doppler-Effekts und elektromagnetischer Strahlung, die eine niedrige Frequenz zwischen 0 GHz und 1000 GHz aufweist, ermittelt werden, ist das Auflösungsvermögen meist unzureichend. Wegen des äußerst geringen Verhältnisses der durchschnittlichen Flußgeschwindigkeit von 5 m/s oder weniger eines Fluids zur Lichtgeschwindigkeit im Vakuum, ergeben sich für Strahlungen im oben angegebenen GHz-Bereich Frequenzverschiebungen, die oft nicht auflösbar sind. So liegt die Doppler-Frequenzverschiebung, die sich aus der Gleichung df = 2·(v/c)f ergibt, für f = 1 GHz und v = 5 m/s bei nur etwa 30 Hz.

Der Erfindung liegt die Aufgabe zugrunde, ein Verfahren aufzuzeigen, mit dem die Durchflußgeschwindigkeiten und die Volumenanteile aller mit elektromagnetischen Wellen wechselwirkender Komponenten eines strömenden Fluids auf einfache Weise ermittelt werden können. Ferner soll eine Vorrichtung geschaffen werden, mit welcher das Verfahren durchgeführt werden kann.

Eine Lösung den ersten Teil der Aufgabe betreffend ist in Patentanspruch 1 offenbart.

Eine Lösung den zweiten Teil der Aufgabe betreffend ist in Patentanspruch 2 offenbart.

Mit dem erfindungsgemäßen Verfahrens werden die Durchflußgeschwindigkeiten und die Volumenanteile der einzelnen Komponenten eines Fluids aus der Wechselwirkung niederfrequenter elektromagnetischer Strahlung mit dem Fluid ermittelt. Dabei wird die kostengünstige Verfügbarkeit von Elektronik genutzt, welche in der Lage ist, die niederfrequenten elektromagnetischen Meßsignale auszuwerten. Mit Hilfe eines Signalgenerators wird zunächst ein elektromagnetisches Signal mit einer Frequenz zwischen 0GHz und 1000GHz erzeugt. Dieses wird durch einer Verzögerungsleitung und durch das zu untersuchende Fluid geleitet. Die Verzögerungsleitung ist innerhalb einer metallischen Abschirmung angeordnet. Diese umschließt zudem die Förderleitung, durch welche das Fluid transportiert wird. Aus der Dopplerverschiebung zwischen dem ursprünglichen und dem resultierenden Signal können die Geschwindigkeit, das Geschwindigkeitsprofil und der Volumenanteil der Komponenten des Fluids ermittelt werden. Hierfür ist eine Auswerteeinheit vorgesehen, der beide Signale zugeführt werden.

Weitere erfinderische Merkmale sind in den abhängigen Ansprüchen gekennzeichnet.

Die Erfindung wird nachfolgend an Hand von Zeichnungen näher erläutert.

Es zeigen:
Fig. 1 eine Vorrichtung zur Durchführung des erfindungsgemäßen Verfahrens,
Fig. 2 das bei der Geschwindigkeitsmessung ermittelte Dopplersprektrum eines Fluids.

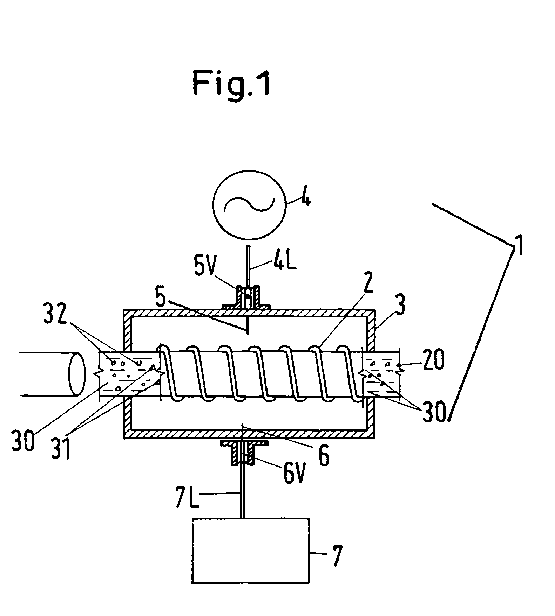

Die in Fig. 1 dargestellte Vorrichtung 1 weist eine Verzögerungsleitung 2, eine Abschirmung 3, einen Signalgenerator 4, zwei Antennen 5 und 6 sowie eine Auswerteeinheit 7 auf. Die Abschirmung 3 ist als geschlossenes Gehäuse ausgebildet, das aus
Metall gefertigt ist. Sie wird von einer rohrförmigen Förderleitung 20 durchsetzt, die von einem Fluid 30 durchströmt wird. Das Fluid 30 weist bei dem hier dargestellten Ausführungsbeispiel zwei Komponenten 31 und 32. Diese haben die Eigenschaft, daß zwischen ihnen und den elektromagnetischen Wellen eine Wechselwirkung statt findet, aus der die Durchflußgeschwindigkeit der einzelnen Komponenten ermittelt werden kann. Von dem Signalgenerator 4 werden für die Messungen niederfrequente elektromagnetische Signale (hier nicht dargestellt) mit einer Frequenz zwischen 0GHz und 1000GHz erzeugt. Die Wahl der Frequenzprofile dieser Signale werden im wesentlichen durch die dielektrischen Eigenschaften der Komponenten des Fluids bestimmt. Die Bestimmung der Durchflußgeschwindigkeit kann bei dem erfindungsgemäßen Verfahren deshalb mit diesen niederfrequenten elektromagnetischen Signalen durchgeführt werden, weil deren Ausbreitungsgeschwindigkeit mit Hilfe der Verzögerungsleitung 2 verringert und somit die relative Frequenzverschiebung aufgrund des Dopplereffekts vergrößert wird. Die Verzögerungsleitung 2 ist aus einem solchen Material und in einer solchen Form gefertigt, die geeignet sind, solche niederfrequenten Signal hinreichend zu führen. Für die Geometrie der Verzögerungsleitung 2 ist es nur entscheidend, daß sie eine hinreichend große Verzögerung dieser Signals ermöglicht, so daß das gewünschte Auflösungsvermögen erreicht wird. Bei dem hier dargestellten Ausführungsbeispiel ist die Verzögerungsleitung 2 in Form einer Wendel um die Förderleitung 20 gewickelt. Eine andere Führung der Verzögerungsleitung 2 mit der gleichen Funktion ist jedoch auch möglich. Das von dem Signalgenerator 4 erzeugte Signal wird über die Signalleitung 4L der Antenne 5 zugeführt. Die Verbindung zwischen der Antenne 5, die sich innerhalb der Abschirmung 3 befindet, und der Signalleitung 4L geschieht über ein geeignetes Verbindungselement 5V, das nach außen übersteht und durch die Abschirmung 3 hindurch nach innen geführt ist. Über die Antenne 5 wird das Signal in die Verzögerungsleitung 2 eingekoppelt. Es wird räumlich durch die Verzögerungsleitung 2 geführt und breitet sich zugleich im strömenden Fluid aus. Wird die Verzögerungsleitung 2 nicht im Resonanzbetrieb betrieben, kann die Einkopplung auch direkt von der Signalleitung 4L aus in die Verzögerungsleitung 2 erfolgen, in diesem Fall ist die Antenne 5 elektrisch leitend mit der Verzögerungsleitung 2 verbunden. Bei der Durchführung des erfindungsgemäßen Verfahrens ist es gleichgültig, ob die Verzögerungsleitung 2 im Resonanz- oder Durchlaßbetrieb betrieben wird.

Der Signalgenerator 4 und die Auswerteeinheit 7 sind bei dem hier dargestellten Ausführungsbeispiel nicht innerhalb der Abschirmung 3 angeordnet. Wenn das erfindungsgemäße Verfahren beispielsweise zur Überwachung der geförderten Menge an Erdöl aus einer unterseeischen Fördereinrichtung verwendet wird, dann werden der Signalgenerator und die Auswerteinheit 7 vorzugsweise an Land installiert. Sie sind dann nur über die Signalleitungen 4L und 7L mit der Vorrichtung 1 verbunden. Der Signalgenerator 4 und die Auswerteeinheit 7 können jedoch auch gemeinsam oder getrennt voneinander in einem wasserdichten Gehäuse (hier nicht dargestellt) neben der Abschirmung 3 montiert werden. Das ist jedoch nur möglich, wenn eine elektrische Energieversorgung an dieser Stelle vorhanden ist. Die Auswerteeinheit steht dann vorzugsweise über eine weitere Signalleitung (hier nicht dargestellt) mit einer an Land installierten Anzeigevorrichtung (hier nicht dargestellt) in Verbindung.

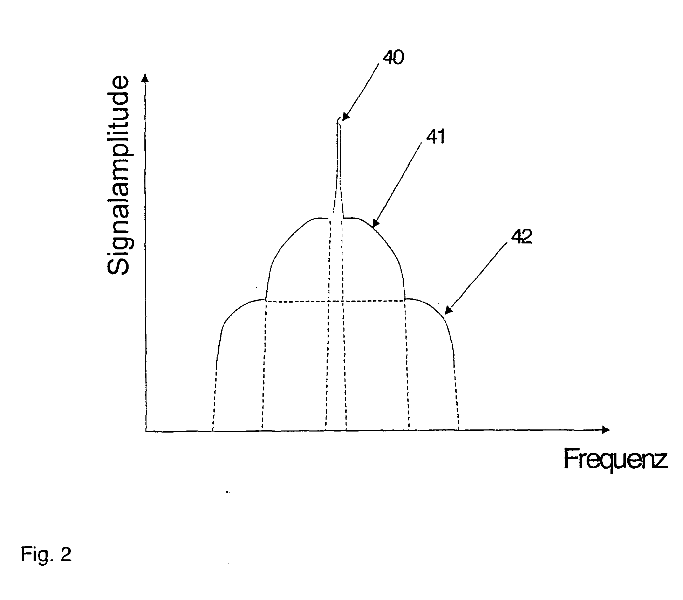

Die Antenne 6 ist in gleicher Weise wie die Antenne 5 installiert. Sie ist über ein Verbindungselement 6V, das durch die Abschirmung geführt ist, an eine Signalleitung 7L angeschlossen, die mit der Auswerteeinrichtung7 in Verbindung steht. Die geometrische Form der Antennen 5 und 6 ist für die Durchführung des erfindungsgemäßen Verfahrens nicht wesentlich. Das Gleiche gilt auch für die geometrische Anordnung der beiden Antennen 5 und 6 zueinander. Es ist auch möglich, die beiden Antennen 5 und 6 durch eine einzige Antenne (hier nicht dargestellt) zu ersetzen, welche die Funktionen der beiden Antennen 5 und 6 übernimmt. Jede der beiden Antennen 5 und 6 kann auch für sich durch ein geeignetes Array von Antennen (hier nicht dargestellt) ersetzt werden. Alternativ können die Antennen durch direkte elektrische Kontaktierung über geeignet gewählte Impedanzbauelemente beispielsweise Kondensatoren, (hier nicht dargestellt) realisiert werden. Mit Hilfe der Antenne 6 wird ein elektromagnetisches Signal aus dem Innenbereich der Abschirmung 3 ausgekoppelt, und zwar zeitgleich mit der Einkopplung des eingekoppelten Signals. Die ausgekoppelten Signale enthalten die gewünschte Information über das Geschwindigkeitsprofil der Komponenten 31 und 32 des Fluids 30. Ein Beispiel für den Verlauf eines vom Signalgenerator 4 erzeugten Signals 40 sowie die Verläufe der Signale 41 und 42, die aus der Abschirmung 3 für das Fluid 30 mit zwei Komponenten 31 und 32 ausgekoppelt werden, sind in Figur 2 schematisch dargestellt.

An den physikalischen Meßprozeß schließt sich eine Datenanalyse in der Auswerteeinheit 7 an, um aus den eingestrahlten und den ausgekoppelten elektromagnetischen Signalen das Geschwindigkeitsprofil zu bestimmen. Das ausgekoppelte Signal wird der Auswerteeinheit 7 von der Antenne 6 über die Signalleitung 7L zugeführt. Die Auswerteeinheit 7 ist als Spektrumanalysator, als Mikroprozessor oder als eine geeignete Kombination hiervon ausgebildet. Es gibt mehrere Möglichkeiten die Analyse der zugeführten Signale durchzuführen. Beispielsweise ist eine Verarbeitung im Zeitbereich, eine Frequenzanalyse bzw. Fourieranalyse oder jede andere orthogonale oder nichtorthogonale Zerlegung der Signale möglich. Weiterhin können informationstheoretische Verfahren wie Maximum Likelihood oder Maximum Entropy Verfahren zur Anwendung kommen. Zusätzlich werden die Meßsignale in der Auswerteeinheit 7 so aufbereitet, daß Meßergebnisse zur Verfügung stehen, die von der Temperatur unabhängig sind.

In der Auswerteeinheit 7 werden aus dem eingekoppelten Signal 40 und den ausgekoppelten Signalen 41 und 42 gemäß Fig. 2 die Geschwindigkeitsprofile der Komponenten 31 und 32 berechnet. Das von dem Signalgenerator 4 erzeugte Signal wird hierfür über einen Abzweig (hier nicht dargestellt) in der Signalleitung 4L auch der Auswerteinheit 7 zugeführt. Die in den ausgekoppelten Signalen enthaltenen Informationen erlaubt es, verschiedene physikalische Eigenschaften des fließenden Fluids zu bestimmen. Das ist in Figur 2 am Frequenzspektrum der ausgekoppelten Signale 41 und 42 zu sehen. Das Frequenzspektrum enthält Strukturen, die sich in Abhängigkeit von den dielektrischen Eigenschaften der Komponenten 31 und 32 den Geschwindigkeitsprofilen der einzelnen Komponenten zuordnen lassen. Die Breite der jeweiligen Kurve ist entsprechend dem Doppler-Effekt ein Maß für die Maximalgeschwindigkeit einer Komponente. Weiterhin ist die Fläche unter jeder Kurve ein Maß für den Volumenanteil der entsprechenden Komponente des strömenden Fluids. Die Höhe der Struktur hängt neben dem Volumenanteil auch von den dielektrischen Eigenschaften der zugehörigen Komponente ab. Sie erlaubt somit eine Identifikation des Materials. Desweiteren kann eine Zuordnung zwischen den charakteristischen Formen der spektralen Strukturen und den Volumenanteilen der jeweiligen Komponenten mittels einer unabhängigen Messung der Fraktionen mit dem Verfahren durchgeführt werden, das in der GB 2 271 637 B beschrieben ist.

Eine mögliche Anwendung des erfindungsgemäßen Verfahren, ist wie bereits oben erwähnt, im Bereich der unterseeischen Erdölförderung gegeben. Um eine Aussage über die Menge des geförderten Erdöls über einen bestimmten Zeitraum machen zu können, ist es wichtig, zu wissen, wie groß der Volumenanteil an Erdöl ist, der von einer Bohrstelle über eine Förderleitung pro Zeiteinheit abtransportiert wird. In die Förderleitung gelangen nicht nur Öl, sondern auch Wasser und Gas, so daß die gesamte Fördermenge pro Zeiteinheit nicht gleich der Menge des geförderten Erdöls entspricht. Mit Hilfe des erfindungsgemäßen Verfahrens lassen sich in diesem Fall die Geschwindigkeiten und die Volumenanteile von Öl 31 und Wasser 32 bestimmen. Der Volumenanteil des Gases kann aus dem Gesamtvolumen des Fluids 30 und den Volumenanteilen der Komponenten 31 und 32 bestimmt werden, so daß sich bei Kenntnis der Durchflußgeschwindigkeiten von Öl 31 und Wasser 32 die geförderte Menge an Öl 31 pro Zeiteinheit ermitteln läßt.

## Patentansprüche

1. Verfahren zur Ermittlung der Durchflussgeschwindigkeiten aller mit elektromagnetischen Wellen wechselwirkender Komponenten (31, 32) eines in einer Förderleitung (20) strömenden Fluids (30), wobei wenigstens ein elektromagnetisches Signal mit einer vorgebbaren Frequenz zwischen 0 GHz und 1000 GHz durch das Fluid (30) geführt und aus der Dopplerverschiebung zwischen dem ursprünglichen und dem resultierenden Signal die Geschwindigkeit einer jeden Komponente (31, 32) ermittelt wird, **dadurch gekennzeichnet, dass** das elektromagnetische Signal zusätzlich räumlich verzögert geführt wird und aus der Dopplerverschiebung zwischen dem ursprünglichen Signal und dem räumlich verzögert geführten Signal die Geschwindigkeit, das Geschwindigkeitsprofil und der Volumenanteil einer jeden Komponente (31, 32) ermittelt wird.

2. Vorrichtung zur Ermittlung der Durchflussgeschwindigkeit aller mit elektromagnetischen Wellen wechselwirkenden Komponenten (31, 32) eines in einer Förderleitung (20) strömenden Fluids (30), wobei die Förderleitung (20) bereichsweise von einer Abschirmung (3) umgeben ist, innerhalb derer sich eine Verzögerungsleitung (2) befindet, in die das niederfrequente Ausgangssignal eines Signalgenerators (4) einkoppelbar ist, und wobei wenigstens ein Ankoppelelement (5, 6) vorgesehen ist, das über ein Verbindungselement (5V, 6V) in die Abschirmung (3) hineinragt und mit dem Signalgenerator (4) und/oder einer Auswerteeinheit (7) verbunden ist, **dadurch gekennzeichnet, dass** die Auswerteeinheit (7) eine Spektrumsanalyse der elektromagnetischen Wellen vornimmt und aus der Doppierverschiebung zwischen den ursprünglichen und den resultierenden Signalen die Durchflussgeschwindigkeiten bestimmt.

3. Vorrichtung nach Anspruch 2, **dadurch gekennzeichnet, dass** die Länge der aus Metall gefertigten Abschirmung (3) so gewählt ist, dass die Verzögerungsleitung (2) vollständig von der Abschirmung (3) umgeben ist, und dass mit dem Signalgenerator (4) elektromagnetische Signale zwischen 0 GHz und 1000 GHz erzeugbar sind.

4. Vorrichtung nach einem der Ansprüche 2 und 3, **dadurch gekennzeichnet, dass** die Verzögerungsleitung (2) in Form einer Wendel um die Förderleitung (20) geführt ist.

5. Vorrichtung nach Anspruch 2, **dadurch gekennzeichnet, dass** das Ankoppelelement (5, 6) als Antenne ausgebildet ist.

## Claims

1. Method for determining the flow velocities of all the components (31, 32) of a fluid (30) flowing in a delivery line (20), said components interacting with electromagnetic waves, at least one electromagnetic signal having a predeterminable frequency of between 0 GHz and 1000 GHz being conducted through the fluid (30), and the velocity of each of the components (31, 32) being determined from the Doppler shift between the original signal and the resulting signal, **characterised in that** the electromagnetic signal is additionally conducted in a spatially delayed manner, and the velocity, the velocity profile and the proportion by volume of each of the components (31, 32) is determined from the Doppler shift between the original signal and the signal conducted in a spatially delayed manner.

2. Apparatus for determining the flow velocity of all the components (31, 32) of a fluid (30) flowing in a delivery line (20), said components interacting with electromagnetic waves, the delivery line (20) being surrounded in regions by a screen (3), within which a delay line (2) is located, into which the low-frequency output signal of a signal generator (4) can be coupled, and at least one coupling element (5, 6) being provided which projects, via a connecting element (5V, 6V), into the screen (3) and is connected to the signal generator (4) and/or an evaluation unit (7), **characterised in that** the evaluation unit (7) carries out a spectrum analysis of the electromagnetic waves and determines the flow velocities from the Doppler shift between the original signals and the resulting signals.

3. Apparatus according to claim 2, **characterised in that** the length of the metal screen (3) is selected such that the delay line (2) is completely surrounded by the screen (3), and **in that** the signal generator (4) is capable of generating electromagnetic signals with frequencies of between 0 GHz and 1000 GHz.

4. Apparatus according to either claim 2 or claim 3, **characterised in that** the delay line (2) is guided around the delivery line (20) in a helical shape.

5. Apparatus according to claim 2, **characterised in that** the coupling element (5, 6) is designed as an antenna.

## Revendications

1. Procédé de détermination des vitesses d'écoulement de toutes les composantes (31, 32), interagissant avec des ondes électromagnétiques, d'un fluide (30) s'écoulant dans une conduite de transport (20), au moins un signal électromagnétique d'une fréquence paramétrable entre 0 GHz et 1 000 GHz étant conduit à travers le fluide (30) et la vitesse de chaque composante (31, 32) étant déterminée à partir du décalage Doppler entre le signal initial et le signal résultant, **caractérisé en ce que** le signal électromagnétique est en plus conduit avec un retard spatial et, à partir du décalage Doppler entre le signal initial et le signal conduit avec un retard spatial, la vitesse, le profil de vitesse et la fraction volumique de chaque composante (31, 32) sont déterminés.

2. Dispositif de détermination de la vitesse d'écoulement de toutes les composantes (31, 32), interagissant avec des ondes électromagnétiques, d'un fluide (30) s'écoulant dans une conduite de transport (20), la conduite de transport (20) étant entourée par zones d'un blindage (3) à l'intérieur duquel se trouve une ligne à retard (2) dans laquelle le signal de sortie basse fréquence d'un générateur de signaux (4) peut être couplé, et au moins un élément de couplage (5, 6) étant prévu, qui fait saillie dans le blindage (3) par le biais d'un élément de raccordement (5V, 6V) et qui est connecté au générateur de signaux (4) et/ou à une unité d'analyse (7), **caractérisé en ce que** l'unité d'analyse (7) effectue une analyse spectrale des ondes électromagnétiques et définit les vitesses d'écoulement à partir du décalage Doppler entre les signaux initiaux et résultants.

3. Dispositif selon la revendication 2, **caractérisé en ce que** la longueur du blindage (3) réalisé en métal est choisie de telle sorte que la ligne à retard (2) est entièrement entourée du blindage (3), et **en ce que** les signaux électromagnétiques entre 0 GHz et 1 000 GHz peuvent être produits avec le générateur de signaux (4).

4. Dispositif selon une des revendications 2 et 3, **caractérisé en ce que** la ligne à retard (2) est guidée autour de la conduite de transport (20) sous la forme d'une hélice.

5. Dispositif selon la revendication 2, **caractérisé en ce que** l'élément de couplage (5, 6) est constitué en tant qu'antenne.
